# EUROPEAN PATENT APPLICATION

(11) **EP 3 699 467 A1**
(43) Date of publication of application: **26.08.2020**
(21) Application number: 20158402.6
(22) Date of filing: 20.02.2020
(51) Int. Cl.: F16K 31/122, F15B 15/08, F15B 15/14, F15B 15/28, F16K 31/143, F16K 37/00

(54) **FLUIDIC ACTUATOR FOR A VALVE OR SIMILAR MEMBER**

(30) Priority: 20.02.2019 IT 201900002451
(71) Applicant: ACTUATOR FLUID CONTROL S.R.L. IN BREVE AFC S.R.L., 20012 Cuggiono (MI) (IT)
(72) Inventor: SANTANIELLO, Francesco Claudio, 20012 Cuggiono (MI) (IT)
(74) Representative: Marietti, Andrea

(57) **Abstract**

Fluidic actuator for a valve (50) or similar device, comprising:
a housing (2) provided with a side wall (2a), a lower wall (2b) and an upper wall (2c);
- a piston movable within said housing (2) and provided with a head (3a) and a rod (3b);
- elastic return means (7) of the piston, which are functionally interposed between said head (3a) of said piston and a wall of said housing (2);
- a plate (8) constrained to said piston so that to translate integrally to said piston, and arranged in the proximity of said side wall (2a) of said housing (2);
- an indicator (9) of the position of the piston comprising a rotatable body rotatably constrained to said side wall (2a) of said housing (2) around a rotation axis and provided with a signaling portion at least visible outside of said housing (2) and with a protrusion (9a) of said rotatable body, the protrusion (9a) being arranged in an eccentric manner with respect to the rotation axis of the same rotatable body and arranged inside said housing (2);

wherein said plate (8) comprises a cam profile and wherein said protrusion (9a) couples to said cam profile in order to make a cam-follower coupling such that the movement of the piston and the plate (8) in said housing (2) results in the at least rotating movement of said protrusion (9a) and, therefore, in the rotation of said rotatable body of said position indicator (9).

## Description

The present invention relates to the field of valve actuators, and in particular the field of fluidic actuators for valves. Such actuators typically have a piston movable within a cylinder, and the valve is operatively connected to the piston such that the movement of the former selectively results in the opening or closing (also partial) of the latter. In particular, the valve can move integrally to the piston (i.e. linearly), or suitable mechanisms turn the linear movement of the piston into a rotating movement of the valve, typically for ball or throttle valves.

The various typologies of actuators, which are on the market, show some drawbacks. When the valve is fitted on a system, it is impossible from the outside to check the opening or closing status of the valve, therefore it is common to use position indicators usually fitted laterally on the actuator such as to indirectly know the position of the valve directly connected to the actuator.

Such members are components visible from outside the actuator, typically movably, generally rotatably, mounted on the side or upper wall of the cylinder in case of compact actuators. Suitable kinematic systems connect such indicator to the piston, typically to the rod thereof, such that the movement of the piston results in a corresponding movement of the indicator. An operator can thus check the valve state by observing the position (typically the rotation degree) of the indicator. However, the known kinematic systems that connect such indicator to the piston are particularly complex. Additionally, in particular in the actuators having compact size, a spring is arranged around the rod of the piston, making the connection between rod of the piston and indicator impossible.

Furthermore, it is known in the art to connect the accessories to the actuator, for example in order to allow the manual activation thereof in case of emergency, to inspect the actuator, etc. The assembling and disassembling of such accessories is particularly complex and cumbersome.

In addition, the valve actuators often have fluid-dynamic, for example pneumatic or hydraulic, actuation. One or more gaskets on the head of the piston are thus needed to be provided, that allow such a fluid to be retained in the chamber intended for the same. Such a gasket is typically arranged inside a notch made on the side wall of the head of the piston. Such a gasket has limited lifetime, and needs therefore to be periodically inspected and/or replaced. In order to access to the gasket, the cylinder has to be opened and the entire piston has to be disassembled, that is, a long and cumbersome procedure needs to be carried out, specifically in case the actuator has noticeable size and is placed on a system in an inconvenient manner.

It is therefore an object of the present invention to provide an actuator that solves one or more of the afore mentioned known problems.

It is an object of the present invention to provide a fluid-dynamic actuator that allows a simple replacement of the gasket coupled to the head of the piston.

It is a further object of the present invention to provide an actuator that allows an operator to locate the position of the piston by an indicator easy to produce.

It is a further object of the present invention to provide an actuator and a related kit that allows a simple assembling and disassembling of one or more accessories. One or more of these objects are achieved by an actuator according to one or more of the attached claims.

According to an aspect of the present invention, an actuator for a valve or similar member comprises:
- a housing provided with a side wall, a lower wall and an upper wall;
- a piston movable within the housing and provided with a head and a rod;
- elastic return means of the piston, functionally interposed between the piston and a wall of the housing;
- a plate constrained to the piston so that to translate integrally to the piston, and arranged in the proximity of the side wall of the housing;
- an indicator of the position of the piston comprising a rotatable body, rotatably constrained to the side wall of the housing around a rotation axis and provided with a signaling portion, at least visible outside the housing and with a protrusion of the rotatable body, arranged in an eccentric manner with respect to the rotation axis of the same rotatable body and arranged inside the housing;
wherein the plate comprises a cam profile and wherein the protrusion couples to the cam profile in order to provide a cam-follower coupling such that the movement of the piston and the plate in the housing results in the at least rotating movement of the protrusion and, therefore, in the rotation of the rotatable body of the position indicator.

The present solution is simple, composed of few pieces, and allows to simply show the valve state, as a function of the position of the piston, despite the presence of the spring.

According to an additional aspect of the present invention, a fluidic actuator for a valve or similar device, comprises:
- a housing provided with a side wall, a lower wall and an upper wall, wherein at least the upper wall is removable and constrained to the side wall;
- a piston movable within the housing and provided with a head and a rod, wherein the head is provided with a groove on its face facing the upper wall of the housing;
- elastic return means of the piston, functionally interposed between the piston and a wall of the housing;
- a fluidic inlet for feeding a fluid between the upper wall of the housing and the head of the piston.

A gasket is inserted in the groove, and a restraining member is configured for at least partially covering the groove and restraining, in use, the gasket in the groove so as to ensure the fluidic tightness between the head of the piston and the side wall of the housing.

The upper wall can be directly or indirectly constrained to the side wall, for example by means of suitable members such as tie rods.

Preferably, the restraining member is selected from two possible solutions. In a first solution, the restraining member comprises a protrusion to restrain, in use, the gasket inside the groove. The protrusion thus provides a reduced size portion of the groove. Thanks to such a solution, the gasket can be quickly inserted in the groove, by pushing the gasket inside the groove, going beyond the mentioned reduced size portion. At the reduced size portion, the gasket is deformed, allowing the same to pass. Once the gasket is completely inserted in the groove, some force is needed in order to draw out the gasket from the latter, since in order to carry out such an operation, there is the need to overcome the gasket resistance to deformation at the groove protrusion.

In a second possible solution, the restraining member comprises a cover removably constrained to the piston by fastening members, typically threaded ones.

Thanks to such a solution the gasket can be quickly removed from the piston, by disassembling the upper wall from the side wall of the housing, and then disassembling the restraining member from the head of the piston.

Another aspect of the present invention relates to an actuator for a valve or similar member, the actuator comprising:
- a housing provided with a side wall, a lower wall and an upper wall;
- a piston movable within the housing and provided with a head and a rod;
- elastic return means of the piston, functionally interposed between the piston and a wall of the housing;
wherein the upper wall, the head and the rod each comprise a hole; such holes are aligned to one another such to allow the insertion of an accessory provided with an elongate body that can be inserted in the holes, and with an operating block constrainable to the upper wall of the housing.

An additional aspect of the present invention relates to a kit comprising:
- an actuator for a valve or similar member, comprising: a housing provided with a side wall, a lower wall and an upper wall; a piston movable within the housing and provided with a head and a rod, and elastic return means of the piston, which are functionally interposed between the piston and a wall of the housing; and wherein the upper wall, the head, and the rod are each provided with a hole, and wherein the holes are aligned to one another;
- at least one accessory provided with an elongate body having a shape substantially complementary to the hole of the rod and with
- an operating block constrainable to the upper wall of the housing.

Thanks to these solutions one or more accessories can be easily assembled and disassembled to/from the actuator.

Referring to the accompanying figures, exemplary and not limiting embodiments of the present invention are now put forward, wherein:

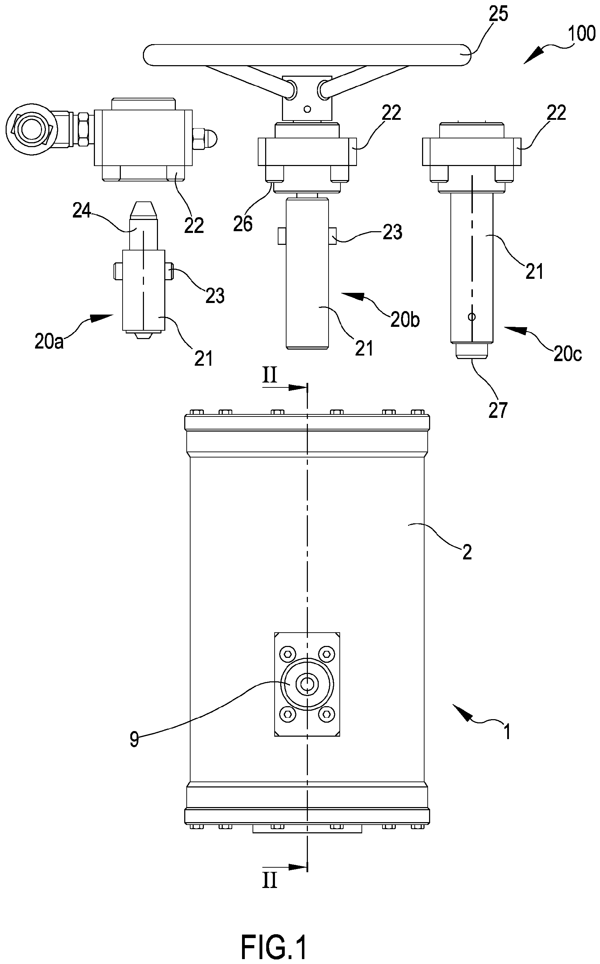

- figure 1 is a schematic front view of a kit comprising an actuator and a plurality of accessories according to a possible embodiment of the present invention;
- figure 2 is a sectional view along the plane A-A of the actuator of figure 1, wherein a valve and a respective kinematic connection to the actuator are schematically shown;
- figure 3 is a perspective view of the actuator of figure 1, wherein the side wall of the housing has been removed;
- figure 4a and 4b are exploded views of alternative embodiments of the restraining member;
- figure 5 is a view similar to that of figure 2 wherein an accessory has been connected to the actuator and wherein, for the sake of simplicity, the spring and the valve are not shown;
- figure 6 is a view similar to that of figure 5, wherein the wheel of the accessory has been actuated so as to move the piston of the actuator;

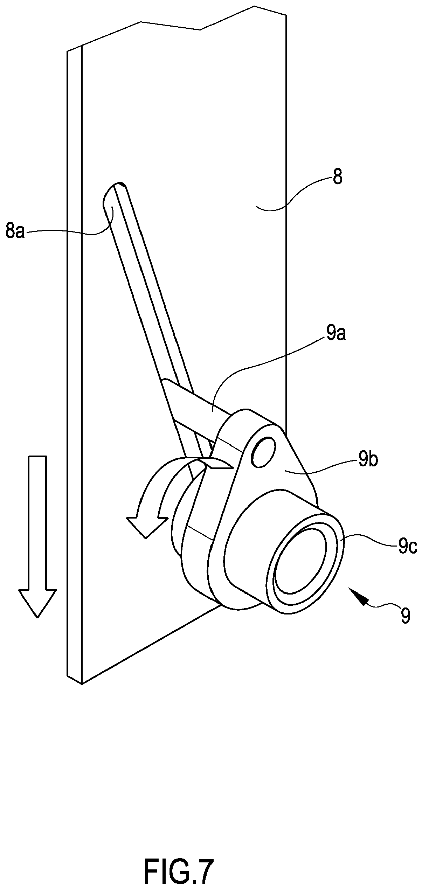

- figure 7 is a detailed perspective view of a portion of the plate provided with the cam profile and the relevant position indicator coupled to such a cam profile.

An actuator 1 for a valve 50 or similar member comprises a piston 3 movable inside a housing 2.

Generally, the housing 2 has cylindrical shape, even if in alternative embodiments not shown in the figures, the housing could have different shapes.

The housing 2 has therefore a side wall 2a, a lower wall 2b and an upper wall 2c. Preferably, at least the upper wall 2c is removably mounted to the side wall 2a, for example by means of threaded members 12. Typically, the lower wall 2b is removably mounted to the side wall 2a, too.

It has to be observed that for convenience, an "upper" and a "lower" walls have been referred to. Such definitions are used referring to the orientation of the actuator 1 shown in the figures. However, it is not excluded that, in use, the actuator 1 is constrained to the valve of a piping with reversed direction (that is rotated by 180 degrees) with respect to what shown, for example under a tube arranged horizontally. In such a case, thus, the "lower" wall would be arranged at a height from the ground higher than the wall defined as "upper" in the present description and the attached figures. Furthermore, the actuator 1 could be mounted laterally to a pipe arranged vertically, thereby the "upper" and "lower" walls would be arranged at the same distance with respect to the ground, i.e. the actuator would be, in use, rotated by 90 degrees with respect to the arrangement shown in the figures, such that the "upper" and "lower" walls are at the same height.

Generally, the piston 3 is slidingly mounted inside the housing 2. The piston 3 typically has an elongate portion known as "rod" 3b, and a base portion known as "head" 3a. Generally, the head 3a of the piston 3 has a diameter which is substantially the same as the inner diameter of the housing 2, whereas the rod 3b has a diameter smaller than the head 3a. The largest dimension of the rod 3b is oriented parallel to the direction along which, in use, the piston 3 is movable within the housing 2.

Various solutions to cause the movement of the piston 3 can be used. Preferably, as in the shown solution, the piston 3 has fluid-dynamic actuation, for example hydrodynamic or by gas. The upper wall 2c of the housing 2 has thus preferably a fluid-dynamic inlet 4 connectable in a known way to a pressurized fluid source, for example a pump or a compressor. Between the head 3a of the piston 3 and the upper wall 2c of the housing 2 a chamber C is therefore formed that is adapted for housing, in use, a fluid. Specifically, when some fluid is forced into the chamber C, the head of the piston is pushed towards the lower wall 2b of the housing 2.

However, different solutions can be provided to move the piston 3, especially in case there is a malfunction of the fluid-dynamic actuating system or in case it is convenient to temporarily actuate the piston 3 more rapidly and in a more controlled way, such as for example by the use of an electric motor or manually-operated actuators, such as for example the accessory 20b, better described in the following.

Preferably, the actuator 1 is provided with elastic return means of the piston 3, for example a helical spring 7 shown in the figures, which are adapted to push the piston 3 towards an established rest position (for example the open position of the valve). When the piston 3 is in rest position, in order to change the state of the valve 50, the piston 3 has to be moved, thus overcoming the resistive force of the spring 7 or of equivalent elastic return means.

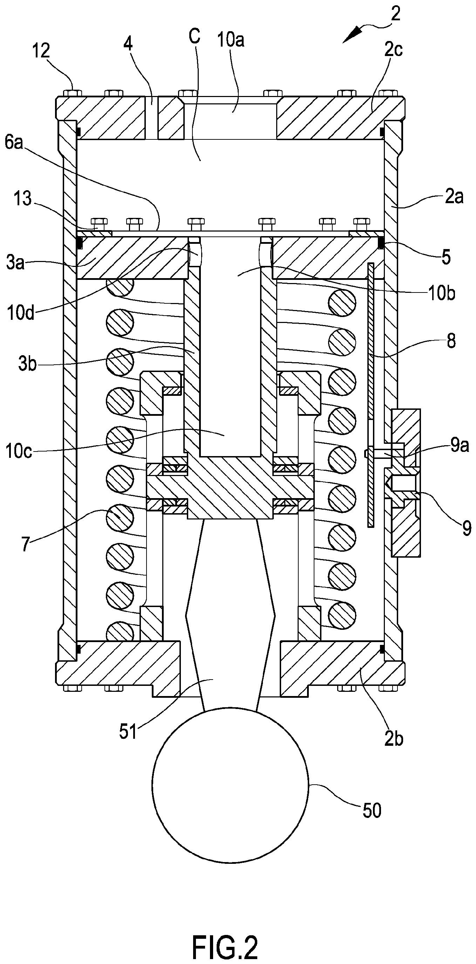

Generally, the piston 3 is movable within the housing 2 such to move the valve 50. In other words, the valve 50 is connected to the piston 3 and preferably to the respective rod 3b, such that the movement of the piston 3 results (depending on the movement direction of the piston) in the selective opening and closing of the valve 50. In such a case, too, different solutions are possible. It has in fact to be observed that, in figure 2, both the valve 50 and the kinematic connection 51, i.e. the set of members connecting the piston to the valve, are schematically shown. Generally the actuation of the valve 50 can be linear or rotary.

According to a first possible embodiment, the linear movement of the piston 3 results in a linear movement of the valve 50. Referring to figure 2, the valve 50 could be for example a blade valve, that moves along a direction perpendicular to the piping axis, such to progressively plug the same. The kinematic connection 51 could therefore be for example a simple body integrally constrained to both the shutter of the valve 50 and the piston 3. Alternatively, the kinematic connection 51 could comprise a gear assembly, such to multiply (or reduce) the movement of the piston 3. Furthermore, the kinematic connection 51 could be omitted, and the gate of the valve 50 could be directly mounted on the rod 3b of the piston 3.

In an additional possible solution, quite common in case of valves for water supply, the valve 50 could be a ball valve, or however a valve provided with a rotatable shutter adapted to rotate inside a valve body such to cause a corresponding shutting or opening of the valve (50) itself. In such a case the kinematic connection 51 is such to turn, in a way known in the art, the linear movement of the piston 3 into a rotating movement of the shutter, for example ball shutter, of the valve 50. For example, the kinematic connection 51 could comprise a cam profile adapted to couple to an element of the piston 3. Alternatively, the kinematic connection 51 could comprise a thread adapted to couple to a respective thread of the piston 3 or still yet could be a circular rack and pinion coupling.

Preferably, as mentioned, the actuator 1 has fluid-dynamic actuation and for example provides the insertion of pressurized air or oil inside the chamber C, i.e. between piston 3 and upper wall 2c of the housing 2. In order to prevent the fluid outflow from the chamber C towards the other compartments of the housing 2, the head 3a of the piston 3 is provided with a gasket 5, typically a ring gasket, or "O-ring", usually made of synthetic material.

In particular, the upper surface 30a of the head 3a of the piston 3, i.e. the surface 30a of the piston 3 facing the upper wall 2c of the housing 2, is provided with a groove 31a. Such a groove 31a is typically arranged at the periphery of the upper surface 30 of the head 3a, such to substantially define a peripheral throat preferably open both on top and laterally, such that, once the gasket 5 has been inserted in the groove 31a, this simultaneously contacts the piston 3 and the side wall 2a of the housing 2, so to ensure the fluidic tightness between the two members.

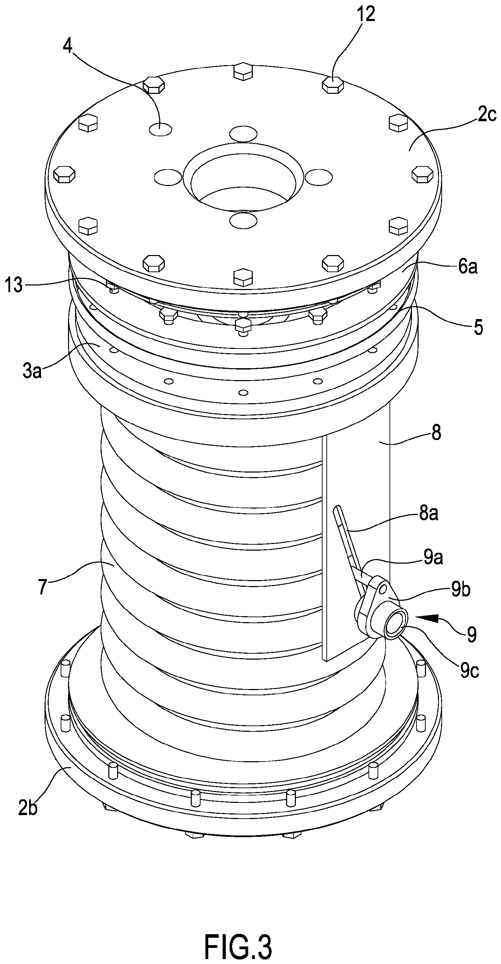

In order to close on top the groove 31a and to restrain the gasket 5 inside thereof, the actuator 1 is provided with a restraining member 6a, 6b configured for at least in part covering the groove 31a such to restrain, in use, the gasket 5 inside the groove itself. In a possible embodiment shown in figures 2-4A, 5 and 6, the restraining element 6a, 6b comprises a cover removably constrainable 6a, for example by appropriate fastening means 13, to the head 3a of the piston 3. The fastening members 13 are typically threaded, even if the use of other typologies of fastening is not excluded. Such a cover 6a is shaped such to close from top, at least in part and in use, the groove 31a, so as to restrain the gasket 5 in position. The cover 6a typically has reduced thickness with respect to the other dimensions, i.e. it is shaped as a plate. Furthermore, the cover 6a has preferably annular shape, that is, in plan view, has a circular crown shape.

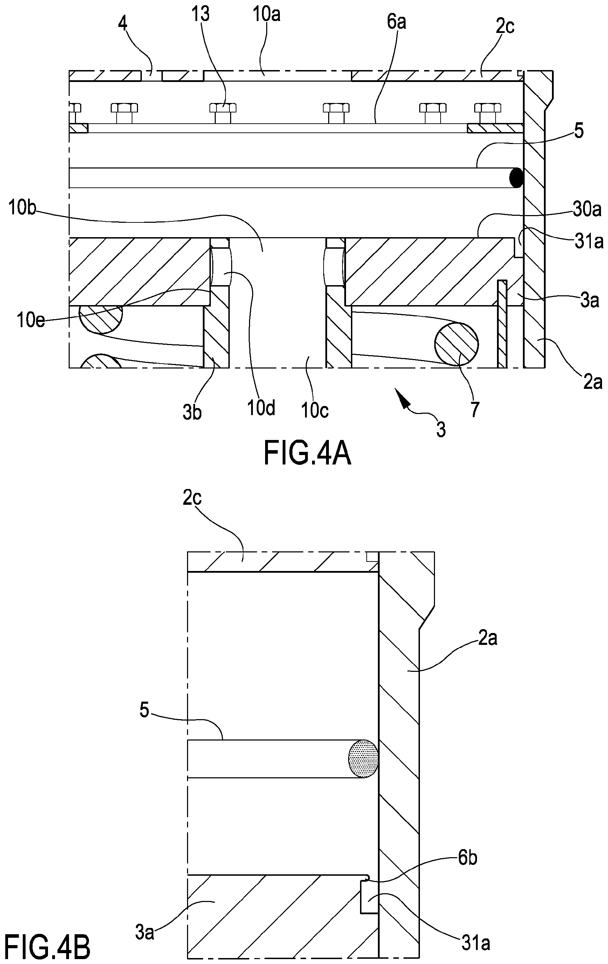

In a possible alternative embodiment shown in figure 4B, the restraining member 6a, 6b is shaped as a protrusion 6b, typically provided on the head of the piston 3a, adapted to partially cover the groove 31a. The protrusion 6b thus forms a reduced section portion (that is a narrowing or necking) of the groove 31a. In order to insert the gasket 5 in the groove 31a the gasket 5 needs therefore to be deformed against the protrusion 6b. Specifically, according to a preferred aspect, a protrusion 6b is provided on the head 3a of the piston 3 at the upper part of the groove 31a, such to form an obstacle to the movement of the gasket 5 in order to restrain it in the groove 31a. The protrusion 6b is thus shaped such to allow the insertion and the removal by forcing the gasket itself such to deform it and passing beyond such a protrusion 6b. This is typically possible thanks to the elasticity of the gasket 5 that, during the insertion of the gasket 5 in the groove 31a, allows the same to pass through the reduced section at the protrusion 6b. During the insertion in the groove 31a, once the protrusion 6b has been passed, the gasket 5 can again expand in the groove 31a itself, that will house the same in use.

According to a preferred aspect of the invention, the actuator 1 further comprises an indicator 9 of the position of the piston 3. Such indicator preferably comprises a rotatable body 9b rotatably constrained to the side wall 2a of the housing 2 around its rotation axis, and comprising at least one visible signaling portion 9c placed outside of the housing 2, or in any case visible from the outside of the housing 2. In the embodiment shown in figures, such a visible signaling portion 9c protrudes from the body 9b at least partially outside of the housing 2. The actuator 1 is shaped such to allow a user to identify the angular position of the indicator 9, for example by a non-axisymmetric configuration and/or by proper labeling means (not shown in the figures), such as for example proper graphical signs or marks arranged on the visible signaling portion 9c of the indicator 9 and/or on the outer wall of the housing 2.

For example, the visible signaling portion 9c of the indicator 9 can have a portion labeled by "ON" and a portion labeled by "OFF", which portions, depending on the angular position reached by the rotating body 9b, are alternately arranged at an arrow, or indicator line, made on the outer wall of the housing 2, which is placed in the proximity of the same rotatable body 9b of the indicator 9, so as to immediately indicate to the operator the state of the actuator 1.

Moreover, the indicator 9 has a protrusion 9a protruding inside the housing 9, and that couples to a respective cam profile 8a arranged on a plate 8 integral to the piston 3. The protrusion 9a is integral to the rotatable body 9b in a position eccentric with respect to the rotation axis of the rotatable body 9b itself of the indicator 9, such that, when the plate 8 moves linearly within the housing 2, the engagement between the cam profile 8a and the protrusion 9a results in an at least rotating movement of the protrusion 9a and thus in a rotation of the rotatable body 9b and the respective visible signaling portion 9c.

As mentioned, the angular position reached by the signaling portion 9c with respect to the wall of the housing 2 to which it corresponds, allows the operator to immediately check the state of the actuator 1, i.e. if the valve 5a is open or closed, depending on the position of the piston 3 inside the actuator 1.

The plate 8 is constrained to the piston 3, preferably to the head 3a thereof. According to a preferred aspect, the plate 8 protrudes towards the lower wall 2b of the housing 2. The plate 8 is typically substantially flat, even if the use of a curved plate is not excluded. The plate 8 is arranged inside the housing 2, between the rod 3b of the piston 3 and the side wall 2a of the housing 2, in the proximity of the latter. As previously described, the actuator 1 can preferably be provided with a helical spring 7 acting on the head 3a of the piston 3. As it can be seen from the figures, such a helical spring 7 can thus be arranged between the head 3a of the piston 3 and the lower wall 2b of the housing 2 such to surround the rod 3b. In this case, the plate 8 is thus arranged between the spring 7 and the side wall 2a of the housing 2.

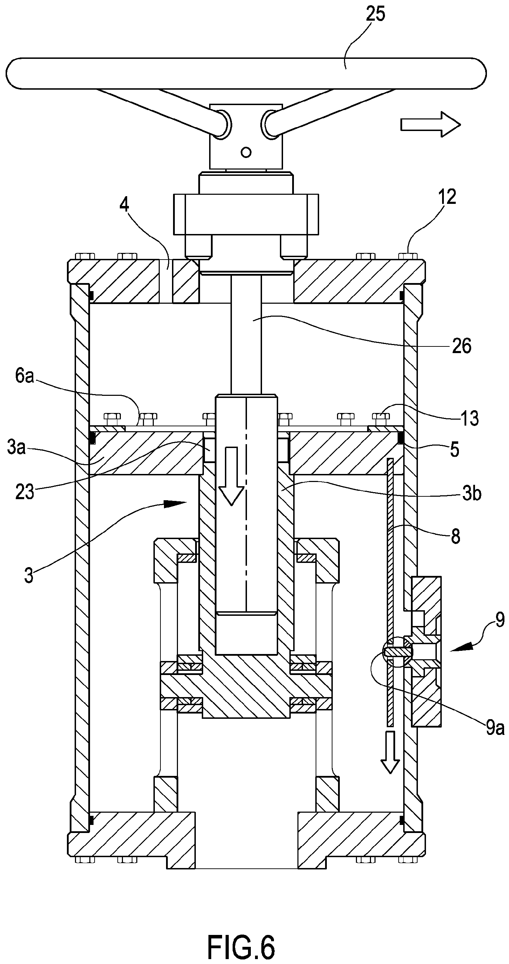

The cam profile 8a can have different shapes depending on the stroke of the piston 3 and the respective desired rotation of the indicator 9. In the embodiment shown, the cam profile 8a is shaped as a slot arranged tilted with respect to the direction along which the piston 3 moves - direction shown by a vertical arrow in figure 6. In such a case, the maximum stroke of the piston (that is the stroke between its end points) results in a rotation of about 90 degrees of the indicator 9.

The slot 8 is preferably straight, although the possibility of making curved slots, or however with different profiles that allow the indicator 9 to be moved, is not excluded.

Generally, by modifying the tilt and/or the shape of the cam profile 8 (for example by making a curved slot), a different rotation angle can be imposed to the indicator 9. According to an aspect of the invention, the actuator 1 is furthermore shaped such to allow the coupling to a plurality of accessories 20a, 20b, 20c.

In particular, the actuator 1 comprises a plurality of holes 10a, 10b, 10c aligned to one another, in which interchangeable accessories 20a, 20b, 20c can be inserted. More in detail, a first hole 10a is arranged on the upper wall 2c of the housing 2. A second hole 10b is arranged on the head 3a of the piston 3 and a third hole 10c is arranged inside the rod 3b. Typically, the hole 10a has larger size than the holes 10b, 10c in order to allow a simple insertion of the accessory 20a, 20b, 20c inside the actuator 1. The holes 10b and 10c typically have the same size and generally the hole 10c is the extension of the hole 10b. In other words, 10b denotes the portion of hole through the head of the piston, whereas 10c denotes the portion of hole through the rod 3b. It has to be observed that the hole 10b is the hole that, in use, crosses the head 3a itself, i.e. when the rod 3b is coupled to the head 3a. In the embodiment shown, the rod 3b is mounted inside a hole 10e of the head 3a. The hole 10e has therefore a diameter substantially corresponding to the outer diameter of the rod 3b and does not coincide with the hole 10b that, in use, passes through the head 3a. The hole 10b is in fact defined by the portion of rod 3b that is inserted inside the head 3a. The hole 10b and/or the hole 10c, i.e. one of the holes of the piston 3, preferably has side openings 10d, that allow an accessory 20a, 20b to be constrained by means of the coupling to protrusions 23, which are typically elastically movable or deformable and provided on the accessory itself.

Of course, other types of coupling among accessories 20a, 20b, 20c of the type preferably provided with an elongate shank and the holes 10a, 10b and 10c, for example couplings of the interlocking type of complementary non-axisymmetric shapes, or through gaskets or elastic spacers, can be provided as well.

The various accessories 20a, 20b, 20c have members in common to one another and are shaped such to easily be constrained to the actuator 1. In particular, the accessories 20a, 20b, 20c have an elongate shank, or however a body 21. At least part of the elongate body 21 has a shape substantially complementary to the holes 10b, 10c made on the piston 3.

As mentioned, in the herein shown embodiment, some side protrusions 23 can be on the elongate body 21, such to couple to the respective openings 10d made on the accessory 1, and thus to make the elongate body 21 integral with the holes 10b, 10c. The accessory 20a, 20b, 20c has in addition, or is however functionally coupled to, an operating block 22 that is constrainable to the upper wall 2c of the housing 2, typically by threaded means (not shown) and thanks to at least a partial insertion inside the respective hole 10a.

Such an operating block can serve, and usually serves, to seal at least the hole 10a, in addition to lock the respective accessory 20a, 20b or 20c in the required position.

Various typologies of accessories can be used in the present invention. For example, in the attached figures an accessory for rapid draining 20a, an accessory for the manual control 20b and an accessory for the hydraulic control 20c are shown. The functioning of such members is known in the art and is herein only briefly discussed. The rapid draining 20a has an elongate body 21 constrainable to the hole 10b and provided with a plug 24. The block 22 has an inner opening (not shown in detail in the figures) that allows the rapid outflow of fluid from the chamber C. When the piston 3 approaches its maximum height point (i.e. gets closer to the upper wall 2c of the housing 2), the plug 24 is inserted inside the block 22, progressively reducing the size of the respective opening. This way the fluid outflow from the chamber C is reduced, and the stroke of the piston 3 is restrained.

The manual control 20b has a wheel 25 that can be manually actuated. The rotation of the wheel 25 results in the block 22 to be moved away from the body 21, in a way known in the art, for example by means of a threaded coupling between a shaft 26 integral with the wheel 25 and a respective opening (not shown in detail) provided inside the elongate body 21. The elongate body 21 is integrally constrainable to the piston 3 (for example by the coupling between the side protrusions 23 and the respective openings 10d). Thereby, a manual rotation of the wheel 25 results in the movement of the elongate body 21 and, therefore, in the movement of the piston 3 integral to the elongate body 21.

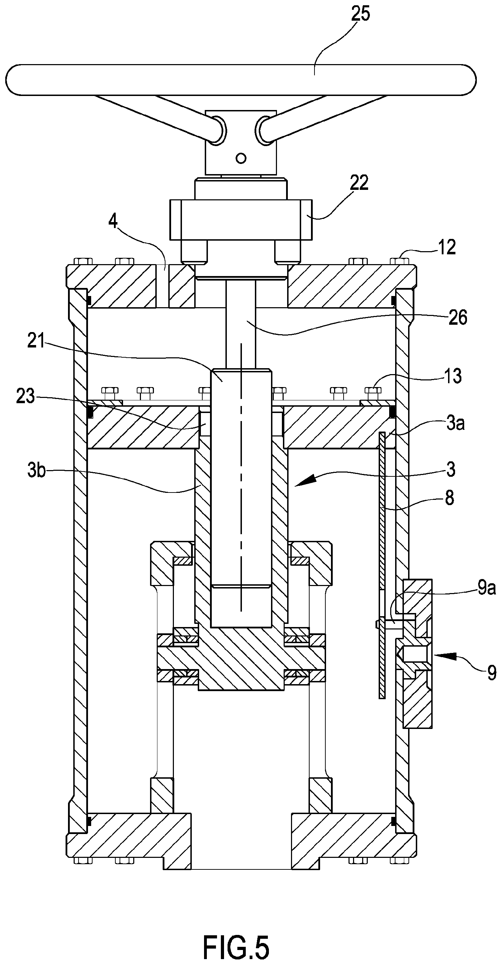

The hydraulic control 20c has a hollow elongate body 21 provided with a tubular member 27 telescopically inserted inside the elongate body 21. The block 22 can be connected to a pressurized hydraulic source (for example a pump) and is constrainable to the housing 2 such to make it integral with the same and to insert the elongate body 21 inside the hole 10c. When a pressurized fluid is inserted in the elongate body 21, the tubular member 27 is pushed outside the elongate body 21, until the piston 3 is pushed via the coupling thereof with the bottom of the hole 10c. Additional typologies of accessories can be coupled to the actuator 1, the following are mentioned only by way of example: a block for the electric movement of the actuator, a primary or auxiliary position indicator positioned on the upper plate rather than laterally, a manual control with reducer, a linear visual position indicator. In use, the actuator 1 is initially in rest position, typically pushed in such a position by the spring 7. Then, when it is desired to modify the state of the valve 50, the piston 3 is moved. As previously described this can happen in various ways, for example by the inflow of fluid inside the chamber 4, by means of an electric motor or a suitable accessory mounted to the actuator 1. The latter case is shown in figures 5 and 6, where in figure 5 the piston is in rest state, and in figure 6 an operator operated the wheel 25 such to push the elongate body 21 and the piston 3 constrained thereto. The movement of the piston 3 results in the change of state (i.e. opening or closing) of the valve 50, typically by a suitable kinematic connection 51. As previously described, the kinematic coupling 51 can be for example configured for linearly moving the valve 50, i.e. to result in the progressive insertion inside a pipe, or can be configured for rotating the valve 50 inside a pipe.

Preferably, the actuator 1 has the plate 8 provided with respective cam profile 8a, integrally constrained to the piston 3, typically to the head 3a of the piston 3. During the stroke of the piston 3, thus, the plate 8 is moved, too. The coupling between the protrusion 9a of the indicator 9 and the cam profile 8a results in the rotation of the indicator 9. Thanks to this an operator, by visually inspecting the indicator 9, is able to check the position of the piston 3 and, therefore, the state of the valve 50. During the maintenance operations of the actuator 1, in case the gasket 5 needs to the inspected and/or replaced, an operator initially disassembles the upper wall 2c from the side wall 2a. Depending on the shape of the restraining member 6a, 6b, in this step the operator can access to the gasket 5 or has to remove the restraining member 6a, 6b in order to access to the gasket 5. For example, if the restraining member comprises a cover 6a removably constrained to the head 3a of the piston 3, as in the embodiment of figure 4A, the operator removes the cover 6a from the head 3a of the piston 3, so as to reveal the groove 31a.

In alternative embodiments, such as the one shown in figure 4B, the removal of the restraining member 6a, 6b is not needed, since this does not entirely cover the groove 31a, thereby the gasket 5 can be directly accessed. Specifically, as in figure 4b, the restraining member 6a, 6b can be a protrusion 6b partially covering the groove 31a. As afore discussed, the removal of the gasket 5 is possible by applying a force larger than a threshold, that allows overcoming the resistance to deformation of the gasket 5, deformation imposed by the protrusion 6b, i.e. a force that allows the gasket 5 to be forced through the reduced section portion of the groove 31a.

Generally, thus, the operator accesses to the gasket 5 contained in the respective groove 31a of the head 3a of the piston 3. Then, the operator can once again insert the just inspected gasket 5, or a new gasket 5, in the groove 31a; if needed, a restraining member 6a can subsequently be reversibly constrained to the piston 3. Afterwards the actuator 1 can be closed, constraining the upper wall 2c to the side wall 2a.

Once these operations are completed, the actuator 1 is once again ready to be used.

## Claims

1. Actuator (1) for a valve (50) or similar device, comprising:
- a housing (2) provided with a side wall (2a), a lower wall (2b) and an upper wall (2c);
- a piston (3) movable within said housing (2) and provided with a head (3a) and a rod (3b);
- elastic return means (7) of the piston (3), which are functionally interposed between said head (3a) of said piston (3) and a wall of said housing (2);
- a plate (8) constrained to said piston (3) so that to translate integrally to said piston (3), and arranged in the proximity of said side wall (2a) of said housing (2);
- an indicator (9) of the position of the piston (3) comprising a rotatable body (9b) rotatably constrained to said side wall (2a) of said housing (2) around a rotation axis and provided with a signaling portion (9c) at least visible outside of said housing (2) and with a protrusion (9a) of said rotatable body (9b), the protrusion (9a) being arranged in an eccentric maner with respect to the rotation axis of the same rotatable body (9b) and arranged inside said housing (2);
wherein said plate (8) comprises a cam profile (8a) and wherein said protrusion (9a) couples to said cam profile (8a) in order to make a cam-follower coupling such that the movement of the piston (3) and the plate (8) in said housing (2) results in the at least rotating movement of said protrusion (9a) and, therefore, in the rotation of said rotatable body (9b) of said position indicator (9).

2. Fluidic actuator (1) according to claim 1, wherein said elastic return means (7) of the piston (3) comprise at least one helical spring (7) interposed between said lower wall (2b) of said housing (2) and the head (3a) of said piston (3) and arranged around said rod (3b) of said piston (3), said plate (8) being arranged between said helical spring (7) and the side wall (2a) of said housing (2).

3. Fluidic actuator (1) according to claim 1 or 2, wherein said cam profile (8a) is shaped as a slot tilted with respect to the movement direction of the piston (3).

4. Fluidic actuator (1) according to one or more of the preceding claims, comprising a fluidic inlet (4) for feeding a fluid between said upper wall (2c) of said housing and said head (3a) of said piston (3); wherein at least the upper wall (2c) is removably constrained to said side wall (2b); wherein said head (3a) is provided with a groove (31a) on its face (30a) facing said upper wall (2c) of said housing (2); wherein a gasket (5) is inserted in said groove (31a), and wherein a restraining member (6a, 6b) is configured for at least partially cover said groove (31a) and restraining, in use, said gasket (5) in said groove (31a) so as to ensure the fluidic tightness between the head (3a) of the piston (3) and the side wall (2a) of the housing (2).

5. Fluidic actuator (1) according to claim 4, wherein said restraining member (6a, 6b) comprises a protrusion (6b) to restrain, in use, said gasket (5) in said grove (31a).

6. Fluidic actuator (1) according to claim 4, wherein said restraining member (6a, 6b) comprises a cover (6a) removably constrained to the head (3a) of said piston (3) by fastening members (13).

7. Fluidic actuator (1) according to one or more of the preceding claims, wherein said elastic return means (7) comprise at least one helical spring interposed between said lower wall (2b) of said housing (2) and the head (3a) of said piston (3) and arranged around said rod (3b) of said piston (3).

8. Fluidic actuator (1) according to one or more of the preceding claims, wherein said plate (8) is constrained to the head (3a) of the piston.

9. Fluidic actuator (1) according to one or more of the preceding claims, wherein said plate (8) protrudes towards the lower wall (2b) of the housing (2).

10. Fluidic actuator (1) according to one or more of the preceding claims, wherein said plate (8) is typically substantially flat.

11. Fluidic actuator (1) according to one or more of the preceding claims, wherein said plate (8) is arranged inside the housing (2), between the rod 3b of the piston (3) and the side wall (2a) of the housing (2).

12. Fluidic actuator (1) according to one or more of the preceding claims, wherein said upper wall (2c), said head (3a) and said rod (3b) are each provided with a hole (10a, 10b, 10c), said holes (10a, 10b, 10c) being aligned to one another such to allow the insertion of an accessory (20a, 20b, 20c) provided with an elongate body (21) that can be inserted in said holes (10a, 10b, 10c) and with an operating block (22) constrainable to said upper wall (2c) of said housing (2).

13. Fluidic actuator (1) for a valve (50) or similar device, comprising:
- a housing (2) provided with a side wall (2a), a lower wall (2b) and an upper wall (2c), wherein at least the upper wall (2c) is removably constrained to said side wall (2b);
- a piston (3) movable within said housing (2) and provided with a head (3a) and a rod (3b), wherein said head (3a) is provided with a groove (31a) on its face (30a) facing said upper wall (2c) of said housing (2);
- elastic return means (7) of the piston (3), which are functionally interposed between said head (3a) of said piston (3) and a wall of said housing (2);
- a fluidic inlet (4) for feeding a fluid between said upper wall (2c) of said housing and said head (3a) of said piston (3).

14. Fluidic actuator (1) for a valve (50) or similar device, comprising:
- a housing (2) provided with a side wall (2a), a lower wall (2b) and an upper wall (2c);
- a piston (3) movable within said housing (2) and provided with a head (3a) and a rod (3b);
- elastic return means (7) of the piston (3), which are functionally interposed between said head (3a) of said piston (3) and a wall of said housing (2);
wherein said upper wall (2a), said head (3a) and said rod (3b) each comprise a hole (10a, 10b, 10c), said holes (10a, 10b, 10c), being aligned to one another such to allow the insertion of an accessory (20a, 20b, 20c) provided with an elongate body (21) that can be inserted in said holes (10a, 10b, 10c), and with an operating block (22) constrainable to said upper wall (2c) of said housing (2).

15. Kit (100) comprising:
- an actuator (1) for a valve (50) or similar member, comprising: a housing (2) provided with a side wall (2a), a lower wall (2b) and an upper wall (2c); a piston (3) movable within said housing (2) and provided with a head (3a) and a rod (3b), and elastic return means (7) of the piston (3), which are functionally interposed between said head (3a) of said piston (3) and a wall of said housing (2); and wherein said upper wall (2c), said head (3a) and said rod (3b) are each provided with a hole (10a, 10b, 10c), said holes (10a, 10b, 10c) being aligned to one another;
- at least one accessory (20a, 20b, 20c) provided with an elongate body (21) having a shape substantially complementary to the hole of said rod (10c) and
- an operating block (22) constrainable to said upper wall (2c) of said housing (2).
